# EUROPEAN PATENT SPECIFICATION

(11) **EP 3 533 249 B1**
(45) Date of publication and mention of the grant of the patent: **17.03.2021**
(21) Application number: 17826288.7
(22) Date of filing: 10.12.2017
(51) Int. Cl.: H04W 16/04, G08G 1/052, G08G 1/095, F21S 8/08, H04W 28/08, F21V 23/04

(54) **NETWORK INFRASTRUCTURE AND SWITCHING THROUGH STREETLIGHTS**
NETZWERKINFRASTRUKTUR UND SCHALTUNG DURCH STRASSENLICHTER
INFRASTRUCTURE DE RÉSEAU ET COMMUTATION À TRAVERS DES RÉVERBÈRES

(30) Priority: 09.12.2016 US 201662432197 P
(43) Date of publication of application: 04.09.2019
(73) Proprietor: Tridonic Inc., Dornbirn, NY 12528 (US)
(72) Inventor: JONSSON, Karl, Rancho Santa Margarita California 92688 (US)
(74) Representative: Rupp, Christian
(86) International application number: PCT/IB2017/057767
(87) International publication number: WO 2018/104924

(56) References cited:
- CN-U- 204 392 313
- CN-U- 204 392 313
- US-A1- 2008 167 774
- US-A1- 2010 070 167
- US-A1- 2010 070 167

## Description

### FIELD OF THE INVENTION

The present invention relates to 2-way wireless data transmission with a series of host 5G cells (or other high speed, wireless transceivers) mounted within lighting enclosures on lampposts located along a roadway, and a method of streaming data along the series of host cells. The invention is particularly well suited to provide high speed data streaming to autonomous vehicles travelling at high speeds through existing or new streetlight infrastructure.

### BACKGROUND OF THE INVENTION

The demand for high speed, high bandwidth wireless data transmission to data consuming devices travelling within a vehicle are constantly increasing, e.g., with wireless streaming of 4K resolution videos on smartphones and other content delivery being the norm. In addition, as the fully autonomous vehicle industry continues to evolve, the data requirements for the vehicle itself including potential real-time video feeds from sensors, etc. will generate yet higher demands for data bandwidth along the roadways. The combination of these trends will have a major impact on the wireless delivery infrastructure that goes well beyond the capacity of 4G/LTE networks. For example, with commuters not driving, they will need to be entertained from various content sources, so when carpooling with other people it is not unlikely that the bandwidth demand for each vehicle could exceed 250 Mbps. Additionally, due to the convenience of autonomous travel the number of cars on the road is projected to increase with increased amount of commuters as living close to work will be less important.

When first generation cell networks came online (first and second generation GSM, NMT and CDMA (U.S. only)), only a few cellular towers needed to be placed near or in the city to cover large areas. As bandwidth and data speed demands increased with 3G and later 4G/LTE networks, much denser networks were needed and were implemented by placing cellular host transceivers almost everywhere possible inside the city. With fifth and sixth generation networks, the capacity needs will likely be so high that the transition frequency is projected to be over 150 GHz, meaning that the range of the host transceivers will be even shorter. For large capacity areas like shopping malls and sports stadiums, there will need to be cell towers on premise to cover the needs of high bandwidth devices at the venue. The problem is that with increased capacity and higher modulation frequencies, the network needs to be progressively denser. At the same time, especially with the advent of autonomous vehicles, roadways are expected to become hot zones for bandwidth demand requiring expensive infrastructure with frequent transceivers and antennas all along the road.

The Wi-Fi standard 802.11p has been developed for vehicle-to-vehicle and vehicle-to-infrastructure applications. Although the 802.11p standard offers a dynamic mesh between vehicle-to-vehicle and vehicle-to-infrastructure, it was not developed to be a high throughput network for data streaming. Rather it focuses on the transmission of metadata and traffic information for the broadcasting of near real-time information through the vehicle mesh to inform about traffic accidents or sudden stops and changes in traffic conditions, which in turn allows navigation systems in vehicles to make appropriate adjustments. The Wi-Fi 802.11P system can in theory transmit up to 27 Mbps which would be almost enough data for a single high quality data stream, but the standard applies across the mesh of all nearby vehicles that share this bandwidth, so systems using the Wi-Fi standard 802.11p will not be adequate to meet the streaming needs of, e.g., multiple autonomous vehicles travelling along a roadway.

The existing lighting infrastructure along many roadways is being converted to so-called SMART LED lighting systems. In these systems, an array of LED lights receives DC power from an LED driver. Line power is typically supplied to the LED driver through a control module which also controls the general operation of the driver and the lights. These components are mounted within a lighting enclosure on a lamppost located along the road. It is known to use a high-speed inter luminaire bus to connect the control module to the LED driver and to environmental sensors. The lighting apparatus can have a light sensor for matching lumen output to the relevant ambient light conditions or a motion sensor to respond to a nearby object. In the case of very tall lampposts or in heavily segmented terrain, it may not be desirable to locate the sensors at or near the luminaire head. Instead, in these situations an additional box containing the sensor system can be mounted on the post at a predetermined height, usually about 3-5 meters above the ground, yet still electrically and/or wirelessly connected to the control module within the lighting enclosure. In SMART systems, the control module is connected to the internet often with fiber optic cable or some other medium capable of transmitting high speed, high bandwidth data Prior-art document US2010/0070167 A1 discloses a system and method for data communication between a vehicle and an infrastructure. The method provides the transfer of a data unit between a vehicle and an infrastructure communication network. The inter-vehicle communication network includes a plurality of roadside communication devices for relaying data to and from a vehicle traveling along a navigation route. At least a portion of the navigation route the vehicle is traversing is determined. The expected roadside communication devices disposed along the navigation route are identified. A respective time period that the vehicle will be within a transmitting range of each respective roadside communication device along the navigation route is estimated.

### SUMMARY OF THE INVENTION

The invention is defined in the independent claims. Advantageous embodiments are subject to the dependent claims. One aspect of the invention not covered by the claims is directed to a system and method of transmitting data wirelessly at a high bit rate and a high bandwidth for streaming to vehicles moving on a roadway. The invention involves the placement of a communications module, a high speed inter luminaire bus and a host 5G cell within a series of lighting enclosures mounted on lampposts located along the road. Alternative host transceivers other than 5G cells can also be used, such as devices using a high speed RF communication protocol or devices using a high speed Visual Light Communication (VLC) protocol. The communications module receives mains power and is also connected to the internet. The inter luminaire bus transfers data and electric power to and from the communications module to components located within the lighting enclosure, and possibly other components as well. Desirably, the lighting system is an LED lighting system so an LED module and an LED driver are also located within the lighting enclosure, with the LED driver attached to the high speed inters luminaire bus and being controlled by the communications module. Miscellaneous environmental sensors can also optionally be connected to the high speed inter luminaire bus.

According to one desired embodiment of the invention not covered by the claims, a 5G cell is connected to the high speed inter luminaire bus and communicates with the communications module within the lighting enclosure. Desirably, the internet connection is a wired high speed communication medium such as fiber optic cable or even Ethernet. Alternatively, the high speed internet connection can take other forms such as a power over Ethernet (PoE) connection. The result is a series of host 5G cells mounted within respective lighting enclosures on lampposts located along a road, each communicating via a high speed inter luminaire bus and a communication module to a wired high speed communications medium and the internet. The series of 5G cells transmits or streams data bi-directionally between data consuming devices travelling with vehicles on the roadway. A router or caching service allocates data needs among the respective 5G cells in the series.

Each 5G cell has a range covering a section of the roadway near the lamppost on which it is mounted. The 5G cells are capable of transmitting wireless data to data consuming devices travelling with the vehicles on the road within the range of the host 5G cell and are also capable of receiving wireless data from data consuming devices travelling with the vehicles on the road within the range of the host 5G cell. The 5G cell can take the form of cell used in a generic cellular tower, or a microcell or a femtocell. Not all of the 5G cells need to be identical to one another.

As a vehicle is travelling on the roadway, the vehicle speed is determined as well as its direction of travel and its high speed data stream requirements for a selected amount of time. Typically, the vehicle's speed and direction of travel are determined via triangulation, although speed and direction can also be determined using radar or camera sensors, or an autonomous vehicle may directly communicate its speed and direction without the use of sensors. The data consuming devices travelling with the vehicle negotiate with the nearest host 5G cell in order to establish the connection to the internet as the vehicle is travelling down the road. A router or caching service is used to calculate the relay buffer that needs to be queued up at subsequent host 5G cells extending in the direction of travel of the vehicle in order to provide uninterrupted service to the data consuming devices traveling with the vehicle. Because of expected travel speeds for vehicles on the road, it is not feasible to renegotiate a connection between each individual host 5G cell. Therefore, the communications protocol is negotiated with the nearest of said host 5G cells. Then, data is streamed in sections or relay buffers through respective 5G cells at the time predicted that the vehicle will be driving through the range of the respective 5G cell. Once a selected time period, e.g. ten seconds, has elapsed or the number of lampposts calculated to have passed during the previous selected time period has been passed, the data consuming devices travelling in the vehicle must renegotiate with the 5G cell which is then closest to the vehicle. Then again, a calculated amount of data sections or relay buffers are streamed from the respective host 5G cells during the respective time intervals without renegotiation between the data consuming devices and the respective host 5G cells yet still provide uninterrupted transfer of data to data consuming devices travelling with the vehicle as it travels down the road.

In one aspect, the algorithm for calculating the relay buffers that need to be queued up at the series of host 5G cells is accomplished by first determining the number of additional lampposts that the vehicle will pass as it travels at the determined speed during a selected period of time. The algorithm also determines time intervals at which the vehicle will pass the respective lampposts. Then, it calculates the amount of data that is needed in the respective relay buffers to stream from the host 5G cells on the respective lamppost at the determined time intervals. If there is an unexpected stop in service, then the data consuming devices must then again negotiate with the nearest host 5G cell to start streaming data.

In some situations, for example when using a autonomous vehicle, it is contemplated that the vehicle may have a 5G transceiver and infrastructure that provides a Wi-Fi network within the vehicle or Bluetooth connectivity so that data consuming devices within the vehicle can access the internet without being 5G compatible. In this situation, the vehicle 5G transceiver needs to negotiate with the nearest host 5G cell and stream data from the series of host 5G cells, and it is not necessary for all the data consuming devices to separately negotiate with and stream data directly from the series of host 5G cells.

As mentioned, other transmission methods, instead of 5G cells, can also be used for the host transceivers including various high speed RF protocol devices or even devices using high speed Visual Light Communication (VLC) like Li-Fi.

Other features and aspects of the invention may be apparent to those of ordinary skill in the art upon reviewing the following drawings and description thereof.

### BRIEF DESCRIPTION OF THE DRAWING

Figure 1 illustrates components used in accordance with one embodiment of the invention showing the components located within a lighting enclosure mounted on a lamppost, and a communications module connected to mains power and a wire high speed communications medium.
Figure 2 is a drawing similar to Figure 1 showing a communications module having a power over Ethernet connection.
Figure 3 is a schematic drawing illustrating a series of lamppost 5G cells connected to the internet along a roadway in accordance with the invention.
Figure 4A-4C is a schematic illustration illustrating the turnover of streaming data to a subsequent series of lamppost 5G cells.
Figure 5 is a block diagram illustrating a preferred algorithm for streaming data from a series of lamppost 5G cells to data consuming devices travelling with a vehicle on a roadway.

### DETAILED DESCRIPTION

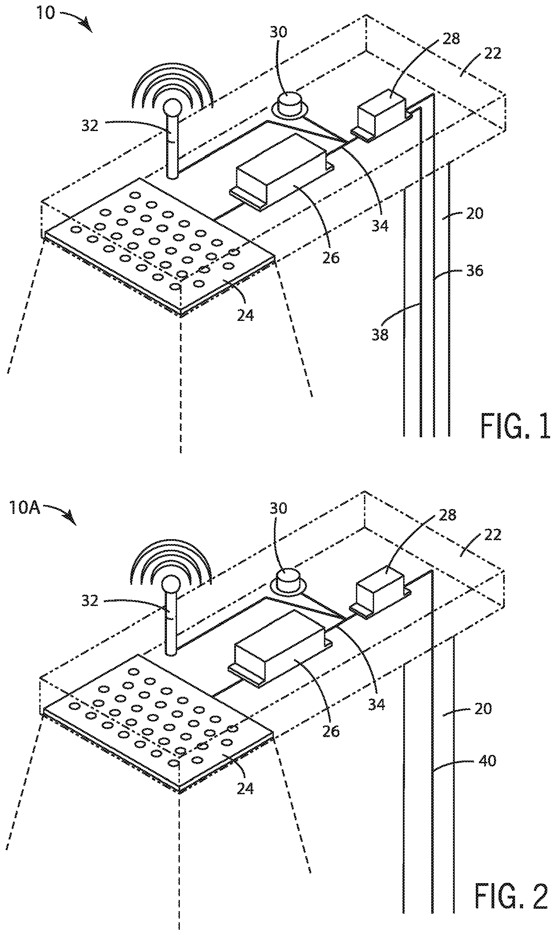

Figure 1 shows a roadway lighting unit 10 constructed in accordance with the invention. The lighting unit 10 includes a lamppost 20 with a lighting enclosure 22 mounted on its top end. An LED module 24, an LED driver 26, a communications module 28, one or more environmental sensors 30 and a 5G cell 32 (or 5G RF transceiver 32) are mounted within the lighting enclosure 22. A high speed inter luminaire bus 34 is connected to the communication module 28. The LED driver 26 and 5G cell 32 are also connected to the high speed inter luminaire bus, as well as the environmental sensors 30. The control module 28 is designed to control the LED driver 26 and the LED module 24, desirably, on the basis of input signals consisting of data signals transmitted to the communications module 28.

Data signals are transmitted to the communications module 28 in Figure 1 over wired high speed communication media 36, which desirably takes the form of a fiber optic cable or an Ethernet connection. It is also conceivable for data and information to be transmitted to the communications module 28 by visible light source communication or other wireless high speed data transmission methods. The communications module 28 desirably has a processing unit, such as an ARM Cortex based microcontroller with an applicable size of Flash and RAM memory. Various sensors 30 can be employed, e.g., a light sensor, temperature sensor, motion sensor, smoke sensor or the like. The communications module 28 is preferably designed to actuate the light source on the basis of the ambient light condition sensed by the sensor 30, and possibly also on the basis of the temperature sensed by a temperature sensor, on the basis of sensing the motion of nearby objects and/or on the basis of smoke density, etc. It is also possible to remotely program and control the lighting unit 10 as a result of communication over the internet with the communications module 28.

In accordance with the invention, a host 5G cell 32 could be connected to the high speed inter luminaire bus 34 based on USB or other short distance network medium and communications module 28 through which the host 5G cell 32 transmits data to and receives data from the internet through the wired high speed communications medium 36. Mains power supplied to the communications module 28 via line 38 and is transmitted to the LED driver 26. Power can be supplied to the other components from the LED driver 26, or from a power regulator in the communications module 28, as necessary via the high speed inter luminaire bus 34. As mentioned, the 5G cell 32 can take the form of a generic 5G cell, a microcell or a femtocell. In any event, the 5G cell must be capable of transmitting wirelessly at at least 5Gbps.

The communications modules 28 each have an internet protocol address (e.g. IPv6) for identification and location of the respective communications module 28. Desirably, data is routed from the internet to the communications module 28 and streamed from the 5G cell 32 via unicast. Content may be delivered using edgecasting techniques.

Figure 2 shows a lighting unit 10A similar to the lighting unit 10 shown in Figure 1 except that the communications module 28 is connected to a power over Ethernet (PoE) cable 40 instead of connecting to a separate wired high speed communication medium 36 and mains power line 38. The PoE cable is powered by a nearby PoE switch.

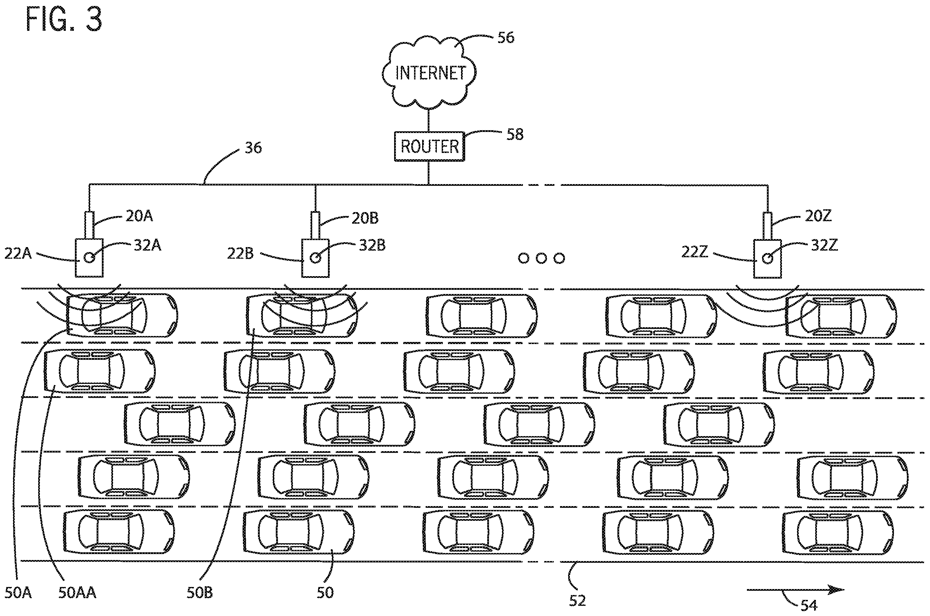

Figure 3 illustrates many vehicles 50 travelling along a multi-lane roadway 52. The roadway 52 has five lanes moving in the direction of the arrow 54. A series of street light host 5G transceivers 32A, 32B ... and 32Z are located next to the road 52. The lighting enclosures 22A, 22B and 22Z would typically be mounted about 12 feet above the ground on lampposts 20A, 20B and 20Z.

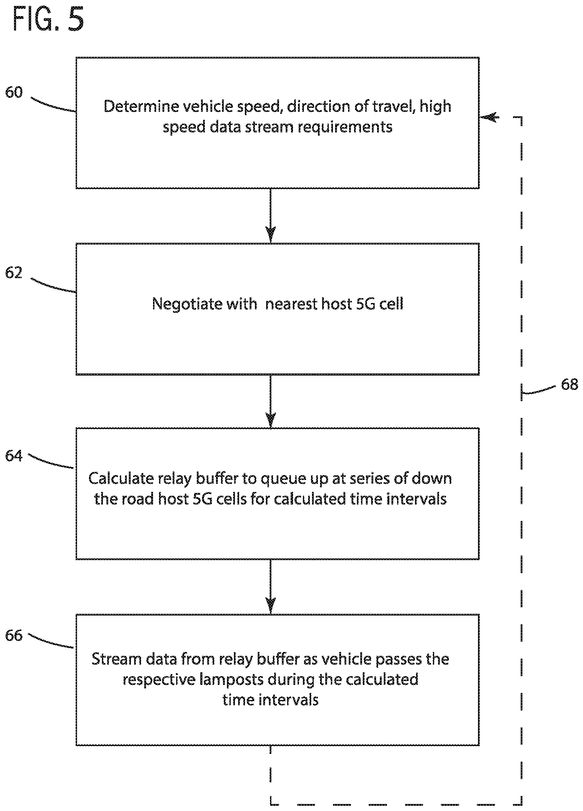

In order for 5G data consuming devices in a vehicle 50 to establish connection with the internet 56, it is necessary in accordance with the invention for the 5G device(s) in the vehicle 50 to negotiate with the nearest host 5G transceiver cell 32A, 32B, or 32Z, Figure 3. Referring to Figure 3, by way of example, host 5G cell 32A is the nearest cell for vehicles 50A and 50AA, whereas host 5G cell 32B is the nearest cell for vehicle 50B. Each host 5G cell 32A, 32B...32Z in the series has a physical coverage range and the coverage ranges overlap. Desirably, the overlapping ranges provide complete coverage for all the lanes on the roadway 52. In the event that a vehicle is within range of two or more of the 5G cells 32A, 32B...32Z, it is desirable that the connection be established with the nearest 5G cell, which can be accomplished for example by traditional cellular roaming methods . Once the vehicle 50, or more accurately the 5G data consuming device(s) moving with the vehicle 50 establish communication with the nearest host 5G cell 32A, 32B...32Z, the router 58 or caching service on the internet 56 calculates the relay buffers and necessary timing for streaming data. Figure 5 depicts an exemplary algorithm for streaming data from a series of lamppost 5G cells 32A, 32B, 32Z travelling with the vehicle 50 on the roadway 52. Block 60 illustrates a first step in which the vehicle's speed, direction of travel and the high speed data requirements are determined. As mentioned previously, the vehicle speed and direction of travel are most likely determined via triangulation of the signals from the host 5G cell transceivers 32A, 32B...32Z, although speed and direction can also be determined using radar or camera sensors, or even communicated from the vehicle 50 to the lamppost 5G cells 32. Once the vehicle speed, direction of travel and high speed data stream requirements have been determined, the next step, shown in block 62, is for the 5G data consuming device to negotiate with the nearest host 5G cell 32A, 32B... 32A. It is possible for the initial negotiation to occur via the established 5G cellular connection or through 802.11p using a nearby or in luminaire access point or through a mesh of vehicles connected to the traffic infrastructure. Once the 5G data consuming device in the vehicle 50 has established communication with the respective host 5G cell 32 and established credentials, the next step is for the router 58 or caching service on the internet 56 to calculate the relay buffers. This step is illustrated in block 64 in Figure 5. The relay buffers are calculated to determine the necessary amount of data that needs to be queued up at the series of host 5G cells 32 down the roadway for calculated time intervals which are determined to coincide with the time interval that the respective vehicle 50 is within coverage range of the respective 5G cell 32. Still referring to Figure 5, block 66 indicates that data is streamed from the relay buffers as the vehicle 50 passes the respective lamppost during the calculated time intervals. Once the vehicle passes the final lamppost 20Z for the group of calculated relay buffers, or after a given amount of time has passed, or for some reason service is interrupted, the process in Figure 5 repeats as indicated by arrow 68. The process as described requires a negotiation or renegotiation of credentials only between the nearest lamppost 5G cell in the series, and then the router 58 streams data via relay buffers delivered to the series of lamppost 5G cells 32B...32Z downstream of the nearest 5G cell 32A.

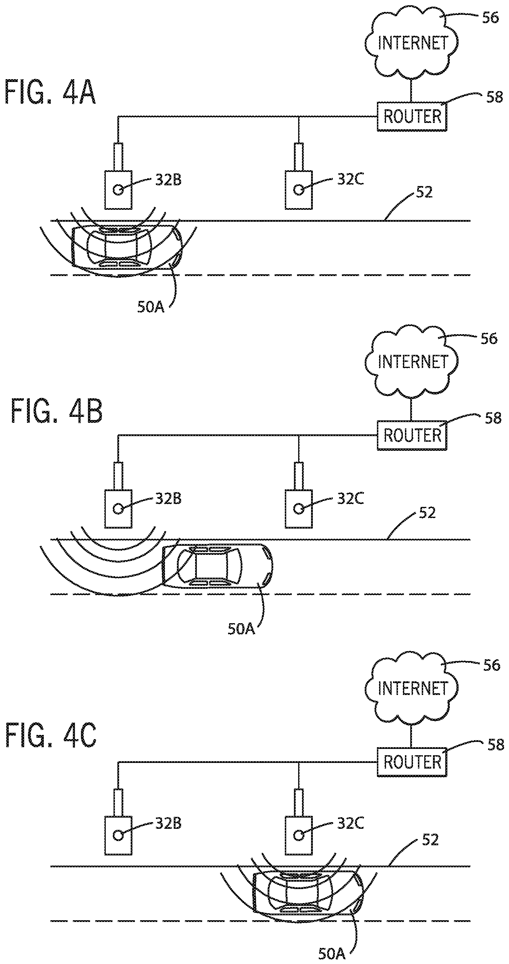

Referring to Figures 4A-4C, these drawings illustrate vehicle 50A, initially shown in Figure 3, as it is travelling along the road 52. Figure 3 depicts the 5G data consuming device(s) in vehicle 5A negotiating credentials with the nearest host 5G cell 32A. In Figure 4A, the vehicle 50A has moved down the roadway 52 and is now within range of the next 5G cell 32B in the series. Data is streamed from the relay buffer sent to the host 5G cell 32B by router 58 without having to renegotiate credentials. Figure 4B shows the vehicle 50A travelling along the road between host 5G cells 32B and 32C. It is likely that the coverage for the host 5G cells overlaps at the position of vehicle 50A shown in 4B, however, streaming from host 5G cell 32B continues until the full relay buffer has been streamed to the data consuming device in the vehicle 50A. The amount of data in the relay buffer and the time interval over which the relay buffer streamed from the respective host 5G cells 32B, 32C are coordinated by the router based on the vehicle's speed, direction of travel and data requirements. Figure 4C shows the vehicle 50A after it continues to travel down the roadway 52 and is now located within the coverage of the next downstream host 5G cell 32C. Figure 4C depicts the next relay buffer of data streaming from host 5G cell 32C to the 5G data consuming device in the vehicle 50A.

While various algorithms can be used to calculate the respective relay buffers and interval timing, the following example provides a suitable method.

Although 5G cells serve as the host transceivers for the purpose of this example, other transmission methods could also be used including various high speed RF protocol transceivers or transceivers using high speed Visual Light Communication (VLC) like Li-Fi.

### Example

Consider an autonomous car driving at 60 mph and streaming a 4K resolution, 15 Mbps video. At time t = 0, the vehicle 50 reports speed and data streaming needs to satisfy continuous streaming for the next X amount of time. This information is sent to the nearest host 5G transceiver 32, i.e., the host 5G transceiver with which the 5G device in the vehicle 50 has negotiated credentials. A back end or local router, or caching service, calculates a relay buffer that needs to be queued up at each 5G transceiver 32 for uninterrupted service. For example, if the amount of time that continuous streaming is needed X is equal to one minute, the stream section from t = 0 to t = 60 sec is 15Mbps x 60 seconds = 900Mb =125MB of data to stream for the next one minute. If the distance between light poles is a constant 100 feet, the vehicle will pass 52 light poles in a minute travelling at 60 mph. This means that the relay buffer for each host 5G cell or lamppost is 125MB/52 = 2.4MB per host 5G cell. In addition to the size of the relay buffers, the time intervals in which the vehicle is expected to pass between the respective lampposts is also calculated, which in this example is 60 seconds / 52 lampposts = 1.5 seconds for the time for the vehicles to pass between lampposts. As a result, assuming that the lampposts are spaced evenly and 100 feet apart, the 125MB of data is segmented into 2.4MB relay buffers and distributed to the next 52 lampposts with a broadcasting interval of TX x 1.15 seconds. The primary benefit being that the system allows continuous uninterrupted unicast of data transfer of large amounts of data without the overhead of roaming or switching between cell towers.

In the present disclosure, certain terms have been used for brevity, clarity, and understanding. No unnecessary limitations are to be inferred therefrom beyond the requirement of the prior art because such terms are used for descriptive purposes and are intended to be broadly construed. The different systems, apparatuses and method steps described herein may be used alone or in combination with other systems, apparatuses and method steps.

## Claims

1. A method of providing high data speed, high bandwidth wireless data transmission to vehicles (50, 50A, 50AA, 50B) moving on a road (52), the method comprising the steps of:
a) providing a plurality of communications modules (28), high speed inter luminaire buses (34) and host cells (32, 32A, 32B, 32Z);
b) providing wired high speed communications medium (36) connected to the internet (56) to a plurality of lighting enclosures (22, 22A, 22B, 22Z) mounted on lampposts (20, 20A, 20B, 20Z) located along the road (52);
c) placing at least one communications module (28), high speed inter luminaire bus (34) and host cell (32, 32A, 32B, 32Z) within a respective lighting enclosure (22, 22A, 22B, 22Z) mounted on the lampposts (20, 20A, 20B, 20Z) located along the road (52), wherein each communications module (28) is connected to wired high speed communications medium (36) and to a high speed inter luminaire bus (34), and the respective host cell (32, 32A, 32B, 32Z) is also connected to the high speed inter luminaire bus (34); and further wherein each host cell (32, 32A, 32B, 32Z) has a range covering a section of the road (52) near the lamppost (20, 20A, 20B, 20Z) on which it is mounted, and is capable of transmitting wireless data to data consuming devices traveling with vehicles (50, 50A, 50AA, 50B) on the road (52) within the range of the host cell (32, 32A, 32B, 32Z) and receiving wireless data from data consuming devices travelling with vehicles (50, 50A, 50AA, 50B) on the road (52) within the range of the host cell (32, 32A, 32B, 32Z);
d) as a vehicle (50, 50A, 50AA, 50B) is travelling on the road (52), determining (60) the vehicle's speed, direction of travel and high speed data stream requirements for a selected amount of time for data consuming devices traveling with the vehicle (50, 50A, 50AA, 50B);
e) negotiating (62) between data consuming devices traveling with the vehicle (50, 50A, 50AA, 50B) and the nearest of said host cells (32, 32A, 32B, 32Z) as the vehicle (50, 50A, 50AA, 50B) is travelling on the road (52);
f) calculating (64) relay buffer that needs to be queued up at a series of host cells (32, 32A, 32B, 32Z) extending in the direction of travel of the vehicle (50, 50A, 50AA, 50B) for uninterrupted service to data consuming devices traveling with the vehicle (50, 50A, 50AA, 50B);
g) transmitting (66) a respective amount of calculated relay buffers from the respective host cells (32, 32A, 32B, 32Z) during determined time intervals without renegotiation between the data consuming devices and the respective host cells (32, 32A, 32B, 32Z) to provide uninterrupted transfer of data to data consuming devices traveling with the vehicle (50, 50A, 50AA, 50B) as vehicle (50, 50A, 50AA, 50B) travels on the road (52); and
h) repeating (68) steps d) through g) as the vehicle (50, 50A, 50AA, 50B) travels further along the road.

2. The method of providing high data speed, high bandwidth wireless data transmission to vehicles (50, 50A, 50AA, 50B) moving on a road (52) recited in claim 1, wherein the step of calculating relay buffers that need to be queued up at a series of host cells (32, 32A, 32B, 32Z) extending in the direction of travel of the vehicle (50, 50A, 50AA, 50B) for uninterrupted service to data consuming devices traveling with the vehicle (50, 50A, 50AA, 50B) is accomplished by:
determining the number of additional lamp posts (20, 20A, 20B, 20Z) that the vehicle (50, 50A, 50AA, 50B) will pass travelling at the determined speed and direction for the vehicle (50, 50A, 50AA, 50B) during the selected period of time, determining time intervals at which the vehicle (50, 50A, 50AA, 50B) will pass the respective lamp posts (20, 20A, 20B, 20Z), and calculating an amount of data that is needed in the respective relay buffers to stream from the host cell (32, 32A, 32B, 32Z) on the respective lamp posts (20, 20A, 20B, 20Z) at the determined time intervals.

3. The method of providing high data speed, high bandwidth wireless data transmission to vehicles (50, 50A, 50AA, 50B) moving on a road (52) recited in claim 1, wherein the relay buffer is calculated by a router.

4. The method of providing high data speed, high bandwidth wireless data transmission to vehicles (50, 50A, 50AA, 50B) moving on a road (52) recited in claim 1, wherein the relay buffer is calculated by a caching service.

5. The method of providing high data speed, high bandwidth wireless data transmission to vehicles (50, 50A, 50AA, 50B) moving on a road (52) recited in claim 1, further comprising the steps of: providing a vehicle transceiver and infrastructure that provides a wifi network and/or Bluetooth connectivity to data consuming devices within the vehicle (50, 50A, 50AA, 50B); and transmitting a signal from the vehicle transceiver to said nearest host cell (32, 32A, 32B, 32Z) representing the vehicle's speed, direction of travel and high speed data stream requirements for the vehicle (50, 50A, 50AA, 50B) for the selected amount of time.

6. The method of providing high data speed, high bandwidth wireless data transmission to vehicles (50, 50A, 50AA, 50B) moving on a road (52) recited in claim 1 wherein the wired high speed communications medium (36) connected to the internet (56) to a plurality of lighting enclosures (22, 22A, 22B, 22Z) mounted on lampposts (20, 20A, 20B, 20Z) located along the road (52) is a fiber optic medium and each respective communications module (28) comprises a terminal for connecting to the fiber optic medium.

7. The method of providing high data speed, high bandwidth wireless data transmission to vehicles (50, 50A, 50AA, 50B) moving on a road (52) recited in claim 1 wherein at least some of the host cells (32, 32A, 32B, 32Z) are microcells or wherein at least some of the host cells (32, 32A, 32B, 32Z) are femtocells.

8. The method of providing high data speed, high bandwidth wireless data transmission to vehicles (50, 50A, 50AA, 50B) moving on a road (52) recited in claim 1 wherein the determining the vehicle's speed and direction of travel is accomplished by triangulating signals from one or more data consuming devices traveling with the vehicle (50, 50A, 50AA, 50B).

9. The method of providing high data speed, high bandwidth wireless data transmission to vehicles (50, 50A, 50AA, 50B) moving on a road (52) recited in claim 1 wherein step e) of negotiating between data consuming devices traveling with the vehicle (50, 50A, 50AA, 50B) and the nearest of said host cells (32, 32A, 32B, 32Z) as the vehicle (50, 50A, 50AA, 50B) is travelling on the road (52) is accomplished repeatedly at fixed intervals of time.

10. The method of providing high data speed, high bandwidth wireless data transmission to vehicles (50, 50A, 50AA, 50B) moving on a road (52) recited in claim 1 wherein step e) of negotiating between data consuming devices traveling with the vehicle (50, 50A, 50AA, 50B) and the nearest of said host cells (32, 32A, 32B, 32Z) as the vehicle (50, 50A, 50AA, 50B) is travelling on the road (52) is accomplished repeatedly after a calculated number of lampposts (20, 20A, 20B, 20Z).

11. The method of providing high data speed, high bandwidth wireless data transmission to vehicles (50, 50A, 50AA, 50B) moving on a road (52) recited in claim 1 wherein step e) of negotiating between data consuming devices traveling with the vehicle (50, 50A, 50AA, 50B) and the nearest of said host cells (32, 32A, 32B, 32Z) as the vehicle (50, 50A, 50AA, 50B) is travelling on the road (52) as well as step f) are further implemented whenever there is an unexpected stop in service.

12. The method of providing high data speed, high bandwidth wireless data transmission to vehicles (50, 50A, 50AA, 50B) moving on a road (52) recited in claim 1 wherein an LED module (24) and LED driver (26) are placed within each respective lighting enclosure (22, 22A, 22B, 22Z) mounted on the lampposts (20, 20A, 20B, 20Z) located along the road (52), and the communications module (28) in the respective lighting enclosure (22, 22A, 22B, 22Z) is connected to the LED driver (26) via the respective high speed inter luminaire bus (34).

13. The method of providing high data speed, high bandwidth wireless data transmission to vehicles (50, 50A, 50AA, 50B) moving on a road (52) recited in claim 12 wherein the communications module (28) further receives mains power, or
wherein power and internet connectivity are provided to at least one of the communications modules (28) via a Power over Ethernet cable powered by a POE switch.

14. The method of providing high data speed, high bandwidth wireless data transmission to vehicles (50, 50A, 50AA, 50B) moving on a road (52) recited in claim 12 wherein an environmental sensor (30) is placed within at least one of the lighting enclosures (22, 22A, 22B, 22Z) mounted on the lampposts (20, 20A, 20B, 20Z) located along the road (52), and the sensor (30) is connected to the communications module (28) in the respective lighting enclosure (22, 22A, 22B, 22Z) via the respective high speed inter luminaire bus (34).

15. A method of providing high data speed, high bandwidth wireless data transmission to vehicles (50, 50A, 50AA, 50B) moving on a road (52), the method comprising the steps of:
providing a plurality of communications modules (28), high speed inter luminaire buses (34) and host transceivers (32, 32A, 32B, 32Z), each host transceivers (32, 32A, 32B, 32Z) being either a cell, a device using a high speed RF communication protocol or a device using a high speed Visual Light Communication (VLC) protocol;
a) providing wired high speed communications medium (36) connected to the internet (56) to a plurality of lighting enclosures (22, 22A, 22B, 22Z) mounted on lampposts (20, 20A, 20B, 20Z) located along the road (52);
b) placing at least one communications module (28), high speed inter luminaire bus (34) and host transceiver (32, 32A, 32B, 32Z) within a respective lighting enclosure (22, 22A, 22B, 22Z) mounted on the lampposts (20, 20A, 20B, 20Z) located along the road (52), wherein each communications module (28) is connected to wired high speed communications medium (36) and to a high speed inter luminaire bus (34), and the respective host transceiver (32, 32A, 32B, 32Z) is also connected to the high speed inter luminaire bus (34); and further wherein each host transceiver (32, 32A, 32B, 32Z) has a range covering a section of the road (52) near the lamppost (20, 20A, 20B, 20Z) on which it is mounted, and is capable of transmitting wireless data to data consuming devices traveling with vehicles (50, 50A, 50AA, 50B) on the road (52) within the range of the host transceiver (32, 32A, 32B, 32Z) and receiving wireless data from data consuming devices travelling with vehicles (50, 50A, 50AA, 50B) on the road (52) within the range of the host transceiver (32, 32A, 32B, 32Z);
c) as a vehicle (50, 50A, 50AA, 50B) is travelling on the road (52), determining the vehicle's speed, direction of travel and high speed data stream requirements for a selected amount of time for data consuming devices traveling with the vehicle (50, 50A, 50AA, 50B);
d) negotiating between data consuming devices traveling with the vehicle (50, 50A, 50AA, 50B) and the nearest of said host transceiver (32, 32A, 32B, 32Z) as the vehicle (50, 50A, 50AA, 50B) is travelling on the road (52);
e) calculating relay buffer that needs to be queued up at a series of host transceivers (32, 32A, 32B, 32Z) extending in the direction of travel of the vehicle (50, 50A, 50AA, 50B) for uninterrupted service to data consuming devices traveling with the vehicle (50, 50A, 50AA, 50B);
f) transmitting a respective amount of calculated relay buffers from the respective host transceivers (32, 32A, 32B, 32Z) during determined time intervals without renegotiation between the data consuming devices and the respective host transceivers (32, 32A, 32B, 32Z) to provide uninterrupted transfer of data to data consuming devices traveling with the vehicle (50, 50A, 50AA, 50B) as vehicle (50, 50A, 50AA, 50B) travels on the road (52); and
g) repeating steps c) through f) as the vehicle (50, 50A, 50AA, 50B) travels further along the road.

## Patentansprüche

1. Verfahren zum Bereitstellen einer drahtlosen Datenübertragung mit hoher Datengeschwindigkeit und hoher Bandbreite für Fahrzeuge (50, 50A, 50AA, 50B), die sich auf einer Straße (52) bewegen, das Verfahren umfassend die Schritte:
a) Bereitstellen einer Vielzahl von Kommunikationsmodulen (28), Hochgeschwindigkeitsbussen zwischen Leuchten (34) und Hostzellen (32, 32A, 32B, 32Z);
b) Bereitstellen eines drahtgebundenen Hochgeschwindigkeitskommunikationsmediums (36), das mit dem Internet (56) mit einer Vielzahl von Beleuchtungsgehäusen (22, 22A, 22B, 22Z) verbunden ist, die auf Lampenmasten (20, 20A, 20B, 20Z) montiert sind, die sich entlang der Straße (52) befinden;
c) Platzieren mindestens eines Kommunikationsmoduls (28), eines Hochgeschwindigkeitsbusses zwischen Leuchten (34) und einer Hostzelle (32, 32A, 32 B, 32Z) in einem jeweiligen Beleuchtungsgehäuse (22, 22A, 22B, 22Z), das an den Lampenmasten (20, 20A, 20B, 20Z) montiert ist, die sich entlang der Straße (52) befinden, wobei jedes Kommunikationsmodul (28) mit einem drahtgebundenen Hochgeschwindigkeitskommunikationsmedium (36) und mit einem Hochgeschwindigkeitsbus zwischen Leuchten (34) verbunden ist und die jeweilige Hostzelle (32, 32A, 32B, 32Z) auch mit dem Hochgeschwindigkeitsbus zwischen Leuchten (34) verbunden ist; und wobei ferner jede Hostzelle (32, 32A, 32B, 32Z) eine Reichweite aufweist, die einen Abschnitt der Straße (52) nahe dem Lampenmast (20, 20A, 20B, 20Z), auf dem sie montiert ist, abdeckt und in der Lage ist, drahtlos Daten an datenverbrauchende Vorrichtungen zu übertragen, die mit Fahrzeugen (50, 50A, 50AA, 50B) auf der Straße (52) innerhalb der Reichweite der Hostzelle (32, 32A, 32B, 32Z) mitfahren und drahtlos Daten von datenverbrauchenden Vorrichtungen zu empfangen, die mit Fahrzeugen (50, 50A, 50AA, 50B) auf der Straße (52) innerhalb der Reichweite der Hostzelle (32, 32A, 32B, 32Z) mitfahren;
d) während ein Fahrzeug (50, 50A, 50AA, 50B) auf der Straße (52) fährt, Bestimmen (60) der Geschwindigkeit des Fahrzeugs, der Fahrtrichtung und der Anforderungen an den Hochgeschwindigkeitsdatenstrom für eine ausgewählte Zeitspanne für datenverbrauchende Vorrichtungen, die in dem Fahrzeug (50, 50A, 50AA, 50B) mitfahren;
e) Verhandeln (62) zwischen den datenverbrauchenden Vorrichtungen, die in dem Fahrzeug (50, 50A, 50AA, 50B) mitfahren, und der nächsten der Hostzellen (32, 32A, 32B, 32Z), während das Fahrzeug (50, 50A, 50AA, 50B) auf der Straße (52) fährt;
f) Berechnen (64) eines Relaispuffers, der zu einer Reihe von Hostzellen (32, 32A, 32B, 32Z) in die Warteschlange eingereiht werden muss, die sich in Fahrtrichtung des Fahrzeugs (50, 50A, 50AA, 50B) erstrecken, für einen ununterbrochenen Dienst für die datenverbrauchenden Vorrichtungen, die in dem Fahrzeug (50, 50A, 50AA, 50B) mitfahren;
g) Übertragen (66) einer jeweiligen Menge berechneter Relaispuffer von den jeweiligen Hostzellen (32, 32A, 32B, 32Z) während bestimmter Zeitintervalle ohne Neuverhandlung zwischen den datenverbrauchenden Vorrichtungen und den jeweiligen Hostzellen (32, 32A, 32B, 32Z), um eine ununterbrochene Übertragung von Daten an datenverbrauchende Vorrichtungen bereitzustellen, die in dem Fahrzeug (50, 50A, 50AA, 50B) mitfahren, während das Fahrzeug (50, 50A, 50AA, 50B) auf der Straße (52) fährt; und
h) Wiederholen (68) der Schritte d) bis g), während das Fahrzeug (50, 50A, 50AA, 50B) weiter die Straße entlangfährt.

2. Verfahren zum Bereitstellen einer drahtlosen Datenübertragung mit hoher Datengeschwindigkeit und hoher Bandbreite für Fahrzeuge (50, 50A, 50AA, 50B), die auf einer Straße (52) fahren, nach Anspruch 1, wobei der Schritt zum Berechnen von Relaispuffern, die zu einer Reihe von Hostzellen (32, 32A, 32B, 32Z) in die Warteschlange eingereiht werden müssen, die sich in Fahrtrichtung des Fahrzeugs (50, 50A, 50AA, 50B) erstrecken, für einen ununterbrochenen Dienst für die datenverbrauchenden Vorrichtungen, die in dem Fahrzeug (50, 50A, 50AA, 50B) mitfahren, durchgeführt wird durch:
Bestimmen der Anzahl zusätzlicher Lampenmasten (20, 20A, 20B, 20Z), die das Fahrzeug (50, 50A, 50AA, 50B) mit der für das Fahrzeug (50, 50A, 50AA, 50B) bestimmten Geschwindigkeit und Richtung während der ausgewählten Zeitspanne passieren wird, Bestimmen von Zeitintervallen, in denen das Fahrzeug (50, 50A, 50AA, 50B) die jeweiligen Lampenmasten (20, 20A, 20B, 20Z) passieren wird, und Berechnen einer Datenmenge, die in den jeweiligen Relaispuffern benötigt wird, um von der Hostzelle (32, 32A, 32B, 32Z) an den jeweiligen Lampenmasten (20, 20A, 20B, 20Z) in den bestimmten Zeitintervallen zu strömen.

3. Verfahren zum Bereitstellen einer drahtlosen Datenübertragung mit hoher Datengeschwindigkeit und hoher Bandbreite für Fahrzeuge (50, 50A, 50AA, 50B), die sich auf einer Straße (52) bewegen, nach Anspruch 1, wobei der Relaispuffer durch einen Router berechnet wird.

4. Verfahren zum Bereitstellen einer drahtlosen Datenübertragung mit hoher Datengeschwindigkeit und hoher Bandbreite für Fahrzeuge (50, 50A, 50AA, 50B), die sich auf einer Straße (52) bewegen, nach Anspruch 1, wobei der Relaispuffer durch einen Cache-Dienst berechnet wird.

5. Verfahren zum Bereitstellen einer drahtlosen Datenübertragung mit hoher Datengeschwindigkeit und hoher Bandbreite für Fahrzeuge (50, 50A, 50AA, 50B), die sich auf einer Straße (52) bewegen, nach Anspruch 1, ferner umfassend die Schritte: Bereitstellen eines Fahrzeug-Sender-Empfängers und einer Infrastruktur, die eine WiFi-Netzwerk- und/oder Bluetooth-Konnektivität zu datenverbrauchenden Vorrichtungen in dem Fahrzeug (50, 50A, 50AA, 50B) bereitstellt; und Übertragen eines Signals von dem Fahrzeug-Sender-Empfänger an die nächste Hostzelle (32, 32A, 32B, 32Z), das die Geschwindigkeit, Fahrtrichtung und Anforderungen an den Hochgeschwindigkeitsdatenstrom des Fahrzeugs (50, 50A, 50AA, 50B) für die ausgewählte Zeitspanne darstellt.

6. Verfahren zum Bereitstellen einer drahtlosen Datenübertragung mit hoher Datengeschwindigkeit und hoher Bandbreite für Fahrzeuge (50, 50A, 50AA, 50B), die sich auf einer Straße (52) bewegen, nach Anspruch 1, wobei das drahtgebundene Hochgeschwindigkeitskommunikationsmedium (36), das mit dem Internet (56) mit einer Vielzahl von Beleuchtungsgehäusen (22, 22A, 22B, 22Z) verbunden ist, die auf Lampenmasten (20, 20A, 20B, 20Z) montiert sind, die sich entlang der Straße (52) befinden, ein faseroptisches Medium ist und jedes jeweilige Kommunikationsmodul (28) einen Anschluss zum Verbinden mit dem faseroptischen Medium umfasst.

7. Verfahren zum Bereitstellen einer drahtlosen Datenübertragung mit hoher Datengeschwindigkeit und hoher Bandbreite für Fahrzeuge (50, 50A, 50AA, 50B), die sich auf einer Straße (52) bewegen, nach Anspruch 1, wobei mindestens einige der Hostzellen (32, 32A, 32B, 32Z) Mikrozellen sind oder wobei mindestens einige der Hostzellen (32, 32A, 32B, 32Z) Femtozellen sind.

8. Verfahren zum Bereitstellen einer drahtlosen Datenübertragung mit hoher Datengeschwindigkeit und hoher Bandbreite für Fahrzeuge (50, 50A, 50AA, 50B), die sich auf einer Straße (52) bewegen, nach Anspruch 1, wobei das Bestimmen der Geschwindigkeit und Fahrtrichtung des Fahrzeugs durch Triangulieren von Signalen von einer oder mehreren datenverbrauchenden Vorrichtungen, die in dem Fahrzeug (50, 50A, 50AA, 50B) mitfahren, durchgeführt wird.

9. Verfahren zum Bereitstellen einer drahtlosen Datenübertragung mit hoher Datengeschwindigkeit und hoher Bandbreite für Fahrzeuge (50, 50A, 50AA, 50B), die sich auf einer Straße (52) bewegen, nach Anspruch 1, wobei der Schritt e) des Verhandelns zwischen datenverbrauchenden Vorrichtungen, die in dem Fahrzeug (50, 50A, 50AA, 50B) mitfahren, und der nächsten der Hostzellen (32, 32A, 32B, 32Z), während das Fahrzeug (50, 50A, 50AA, 50B) auf der Straße (52) fährt, wiederholt in festen Zeitintervallen durchgeführt wird.

10. Verfahren zum Bereitstellen einer drahtlosen Datenübertragung mit hoher Datengeschwindigkeit und hoher Bandbreite für Fahrzeuge (50, 50A, 50AA, 50B), die sich auf einer Straße (52) bewegen, nach Anspruch 1, wobei der Schritt e) des Verhandelns zwischen datenverbrauchenden Vorrichtungen, die in dem Fahrzeug (50, 50A, 50AA, 50B) mitfahren, und der nächsten der Hostzellen (32, 32A, 32B, 32Z), während das Fahrzeug (50, 50A, 50AA, 50B) auf der Straße (52) fährt, wiederholt nach einer berechneten Anzahl von Lampenmasten (20, 20A, 20B, 20Z) durchgeführt wird.

11. Verfahren zum Bereitstellen einer drahtlosen Datenübertragung mit hoher Datengeschwindigkeit und hoher Bandbreite für Fahrzeuge (50, 50A, 50AA, 50B), die sich auf einer Straße (52) bewegen, nach Anspruch 1, wobei der Schritt e) des Verhandelns zwischen datenverbrauchenden Vorrichtungen, die in dem Fahrzeug (50, 50A, 50AA, 50B) mitfahren, und der nächsten der Hostzellen (32, 32A, 32B, 32Z), während das Fahrzeug (50, 50A, 50AA, 50B) auf der Straße (52) fährt, ebenso wie Schritt f) ferner implementiert werden, wenn eine unerwartete Unterbrechung des Diensts auftritt.

12. Verfahren zum Bereitstellen einer drahtlosen Datenübertragung mit hoher Datengeschwindigkeit und hoher Bandbreite für Fahrzeuge (50, 50A, 50AA, 50B), die sich auf einer Straße (52) bewegen, nach Anspruch 1, wobei ein LED-Modul (24) und ein LED-Treiber (26) in jedem der jeweiligen Beleuchtungsgehäuse (22, 22A, 22B, 22Z), die an den Lampenmasten (20, 20A, 20B, 20Z) montiert sind, die sich entlang der Straße (52) befinden, platziert ist, und das Kommunikationsmodul (28) in dem jeweiligen Beleuchtungsgehäuse (22, 22A, 22B, 22Z) mit dem LED-Treiber (26) über den jeweiligen Hochgeschwindigkeitsbus zwischen Leuchten (34) verbunden ist.

13. Verfahren zum Bereitstellen einer drahtlosen Datenübertragung mit hoher Datengeschwindigkeit und hoher Bandbreite für Fahrzeuge (50, 50A, 50AA, 50B), die sich auf einer Straße (52) bewegen, nach Anspruch 12, wobei das Kommunikationsmodul (28) ferner Netzstrom empfängt, oder
wobei Strom und Internetkonnektivität mindestens einem der Kommunikationsmodule (28) über ein Power-over-Ethernet-Kabel bereitgestellt werden, das von einer PoE-Schaltung mit Strom versorgt wird.

14. Verfahren zum Bereitstellen einer drahtlosen Datenübertragung mit hoher Datengeschwindigkeit und hoher Bandbreite für Fahrzeuge (50, 50A, 50AA, 50B), die sich auf einer Straße (52) bewegen, nach Anspruch 12, wobei ein Umgebungssensor (30) in mindestens einem der Beleuchtungsgehäuse (22, 22A, 22B, 22Z), die an den Lampenmasten (20, 20A, 20B, 20Z) montiert sind, die sich entlang der Straße (52) befinden, platziert ist und der Sensor (30) mit dem Kommunikationsmodul (28) in dem jeweiligen Beleuchtungsgehäuse (22, 22A, 22B, 22Z) über den jeweiligen Hochgeschwindigkeitsbus zwischen Leuchten (34) verbunden ist.

15. Verfahren zum Bereitstellen einer drahtlosen Datenübertragung mit hoher Datengeschwindigkeit und hoher Bandbreite für Fahrzeuge (50, 50A, 50AA, 50B), die sich auf einer Straße (52) bewegen, das Verfahren umfassend die Schritte:
Bereitstellen einer Vielzahl von Kommunikationsmodulen (28), Hochgeschwindigkeitsbussen zwischen Leuchten (34) und Host-Sender-Empfängern (32, 32A, 32B, 32Z), wobei jeder Host-Sender-Empfänger (32, 32A, 32B, 32Z) entweder eine Zelle, eine Vorrichtung, die ein Hochgeschwindigkeits-HF-Kommunikationsprotokoll verwendet, oder eine Vorrichtung, die ein Hochgeschwindigkeits-Visual-Light-Kommunikationsprotokoll (VLC-Protokoll) verwendet, ist;
a) Bereitstellen eines drahtgebundenen Hochgeschwindigkeitskommunikationsmediums (36), das mit dem Internet (56) mit einer Vielzahl von Beleuchtungsgehäusen (22, 22A, 22B, 22Z) verbunden ist, die auf Lampenmasten (20, 20A, 20B, 20Z) montiert sind, die sich entlang der Straße (52) befinden;
b) Platzieren mindestens eines Kommunikationsmoduls (28), eines Hochgeschwindigkeitsbusses zwischen Leuchten (34) und eines Host-Empfänger-Senders (32, 32A, 32 B, 32Z) in einem jeweiligen Beleuchtungsgehäuse (22, 22A, 22B, 22Z), das an den Lampenmasten (20, 20A, 20B, 20Z) montiert ist, die sich entlang der Straße (52) befinden, wobei jedes Kommunikationsmodul (28) mit einem drahtgebundenen Hochgeschwindigkeitskommunikationsmedium (36) und mit einem Hochgeschwindigkeitsbus zwischen Leuchten (34) verbunden ist und der jeweilige Host-Sender-Empfänger (32, 32A, 32B, 32Z) auch mit dem Hochgeschwindigkeitsbus zwischen Leuchten (34) verbunden ist; und wobei ferner jeder Host-Sender-Empfänger (32, 32A, 32B, 32Z) eine Reichweite aufweist, die einen Abschnitt der Straße (52) nahe dem Lampenmast (20, 20A, 20B, 20Z), auf dem sie montiert ist, abdeckt und in der Lage ist, drahtlos Daten an datenverbrauchende Vorrichtungen zu übertragen, die mit Fahrzeugen (50, 50A, 50AA, 50B) auf der Straße (52) innerhalb der Reichweite des Host-Sender-Empfängers (32, 32A, 32B, 32Z) mitfahren und drahtlos Daten von datenverbrauchenden Vorrichtungen zu empfangen, die mit Fahrzeugen (50, 50A, 50AA, 50B) auf der Straße (52) innerhalb der Reichweite des Host-Sender-Empfängers (32, 32A, 32B, 32Z) mitfahren;
c) während ein Fahrzeug (50, 50A, 50AA, 50B) auf der Straße (52) fährt, Bestimmen der Geschwindigkeit des Fahrzeugs, der Fahrtrichtung und der Anforderungen an den Hochgeschwindigkeitsdatenstrom für eine ausgewählte Zeitspanne für datenverbrauchende Vorrichtungen, die in dem Fahrzeug (50, 50A, 50AA, 50B) mitfahren;
d) Verhandeln zwischen den datenverbrauchenden Vorrichtungen, die in dem Fahrzeug (50, 50A, 50AA, 50B) mitfahren, und dem nächsten der Host-Sender-Empfänger (32, 32A, 32B, 32Z), während das Fahrzeug (50, 50A, 50AA, 50B) auf der Straße (52) fährt;
e) Berechnen eines Relaispuffers, der zu einer Reihe von Host-Sender-Empfängern (32, 32A, 32B, 32Z) in die Warteschlange eingereiht werden muss, die sich in Fahrtrichtung des Fahrzeugs (50, 50A, 50AA, 50B) erstrecken, für einen ununterbrochenen Dienst für die datenverbrauchenden Vorrichtungen, die in dem Fahrzeug (50, 50A, 50AA, 50B) mitfahren;
f) Übertragen einer jeweiligen Menge berechneter Relaispuffer von den jeweiligen Host-Sender-Empfängern (32, 32A, 32B, 32Z) während bestimmter Zeitintervalle ohne Neuverhandlung zwischen den datenverbrauchenden Vorrichtungen und den jeweiligen Host-Sender-Empfängern (32, 32A, 32B, 32Z), um eine ununterbrochene Übertragung von Daten an datenverbrauchende Vorrichtungen bereitzustellen, die in dem Fahrzeug (50, 50A, 50AA, 50B) mitfahren, während das Fahrzeug (50, 50A, 50AA, 50B) auf der Straße (52) fährt; und
g) Wiederholen der Schritte c) bis f), während das Fahrzeug (50, 50A, 50AA, 50B) weiter die Straße entlangfährt.

## Revendications

1. Procédé de fourniture d'une transmission de données sans fil à haut débit de données et bande passante élevée à des véhicules (50, 50A, 50AA, 50B) en mouvement sur une route (52), le procédé comprenant les étapes consistant à :
a) fournir une pluralité de modules de communication (28), de bus inter-luminaires à haut débit (34) et de cellules hôtes (32, 32A, 32B, 32Z) ;
b) fournir un support de communications câblé à haut débit (36) connecté à Internet (56) à une pluralité d'enceintes d'éclairage (22, 22A, 22B, 22Z) montées sur des poteaux d'éclairage (20, 20A, 20B, 20Z) situés le long de la route (52) ;
c) placer au moins un module de communication (28), un bus inter-luminaire à haut débit (34) et une cellule hôte (32, 32A, 32B, 32Z) au sein d'une enceinte d'éclairage respective (22, 22A, 22B, 22Z) montée sur les poteaux d'éclairage (20, 20A, 20B, 20Z) situés le long de la route (52), dans lequel chaque module de communications (28) est connecté à un support de communications câblé à haut débit (36) et à un bus inter-luminaire à haut débit (34), et la cellule hôte respective (32, 32A, 32B, 32Z) est également connectée au bus inter-luminaire à haut débit (34) ; et dans lequel en outre chaque cellule hôte (32, 32A, 32B, 32Z) a une portée couvrant une section de la route (52) près du poteau d'éclairage (20, 20A, 20B, 20Z) sur lequel elle est montée, et est capable de transmettre des données sans fil à des dispositifs consommateurs de données se déplaçant avec des véhicules (50, 50A, 50AA, 50B) sur la route (52) au sein de la portée de la cellule hôte (32, 32A, 32B, 32Z) et de recevoir des données sans fil à partir de dispositifs consommateurs de données se déplaçant avec des véhicules (50, 50A, 50AA, 50B) sur la route (52) au sein de la portée de la cellule hôte (32, 32A, 32B, 32Z) ;
d) à mesure qu'un véhicule (50, 50A, 50AA, 50B) se déplace sur la route (52), déterminer (60) la vitesse du véhicule, la direction de déplacement et des exigences de flux de données à haut débit pour une quantité sélectionnée de temps pour des dispositifs consommateurs de données se déplaçant avec le véhicule (50, 50A, 50AA, 50B) ;
e) négocier (62) entre des dispositifs consommateurs de données se déplaçant avec le véhicule (50, 50A, 50AA, 50B) et la plus proche desdites cellules hôtes (32, 32A, 32B, 32Z) à mesure que le véhicule (50, 50A, 50AA, 50B) se déplace sur la route (52) ;
f) calculer (64) un tampon relais qui doit être mis en file d'attente au niveau d'une série de cellules hôtes (32, 32A, 32B, 32Z) s'étendant dans la direction de déplacement du véhicule (50, 50A, 50AA, 50B) pour un service ininterrompu à des dispositifs consommateurs de données se déplaçant avec le véhicule (50, 50A, 50AA, 50B) ;
g) transmettre (66) une quantité respective de tampons relais calculés à partir des cellules hôtes respectives (32, 32A, 32B, 32Z) pendant des intervalles de temps déterminés sans renégociation entre les dispositifs consommateurs de données et les cellules hôtes respectives (32, 32A, 32B, 32Z) pour fournir un transfert ininterrompu de données vers des dispositifs consommateurs de données se déplaçant avec le véhicule (50, 50A, 50AA, 50B) à mesure que le véhicule (50, 50A, 50AA, 50B) se déplace sur la route (52) ; et
h) répéter (68) les étapes d) à g) à mesure que le véhicule (50, 50A, 50AA, 50B) se déplace davantage le long de la route.

2. Procédé de fourniture d'une transmission de données sans fil à haut débit de données et bande passante élevée à des véhicules (50, 50A, 50AA, 50B) en mouvement sur une route (52) selon la revendication 1, dans lequel l'étape de calcul de tampons relais qui doivent être mis en file d'attente au niveau d'une série de cellules hôtes (32, 32A, 32B, 32Z) s'étendant dans la direction de déplacement du véhicule (50, 50A, 50AA, 50B) pour un service ininterrompu à des dispositifs consommateurs de données se déplaçant avec le véhicule (50, 50A, 50AA, 50B) est accompli par :
la détermination du nombre de poteaux d'éclairage supplémentaires (20, 20A, 20B, 20Z) que le véhicule (50, 50A, 50AA, 50B) franchira en se déplaçant à la vitesse et dans la direction déterminées pour le véhicule (50, 50A, 50AA, 50B) pendant la période de temps sélectionnée, la détermination d'intervalles de temps auxquels le véhicule (50, 50A, 50AA, 50B) franchira les poteaux d'éclairage respectifs (20, 20A, 20B, 20Z), et le calcul d'une quantité de données qui est nécessaire dans les tampons relais respectifs pour diffuser en flux à partir de la cellule hôte (32, 32A, 32B, 32Z) sur les poteaux d'éclairage respectifs (20, 20A, 20B, 20Z) aux intervalles de temps déterminés.

3. Procédé de fourniture d'une transmission de données sans fil à haut débit de données et bande passante élevée à des véhicules (50, 50A, 50AA, 50B) en mouvement sur une route (52) selon la revendication 1, dans lequel le tampon relais est calculé par un routeur.

4. Procédé de fourniture d'une transmission de données sans fil à haut débit de données et bande passante élevée à des véhicules (50, 50A, 50AA, 50B) en mouvement sur une route (52) selon la revendication 1, dans lequel le tampon relais est calculé par un service de mise en cache.

5. Procédé de fourniture d'une transmission de données sans fil à haut débit de données et bande passante élevée à des véhicules (50, 50A, 50AA, 50B) en mouvement sur une route (52) selon la revendication 1, comprenant en outre les étapes consistant à : fournir un émetteur-récepteur et une infrastructure de véhicule qui fournit un réseau Wi-Fi et/ou une connectivité Bluetooth à des dispositifs consommateurs de données au sein du véhicule (50, 50A, 50AA, 50B) ; et transmettre un signal à partir de l'émetteur-récepteur de véhicule vers ladite cellule hôte la plus proche (32, 32A, 32B, 32Z) représentant la vitesse du véhicule, la direction de déplacement et les exigences de flux de données à haut débit pour le véhicule (50, 50A, 50AA, 50B) pour la quantité de temps sélectionnée.

6. Procédé de fourniture d'une transmission de données sans fil à haut débit de données et bande passante élevée à des véhicules (50, 50A, 50AA, 50B) en mouvement sur une route (52) selon la revendication 1, dans lequel le support de communications câblé à haut débit (36) connecté à Internet (56) à une pluralité d'enceintes d'éclairage (22, 22A, 22B, 22Z) montées sur des poteaux d'éclairage (20, 20A, 20B, 20Z) situés le long de la route (52) est un support à fibre optique et chaque module de communications respectif (28) comprend une borne pour connexion au support à fibre optique.

7. Procédé de fourniture d'une transmission de données sans fil à haut débit de données et bande passante élevée à des véhicules (50, 50A, 50AA, 50B) en mouvement sur une route (52) selon la revendication 1, dans lequel au moins certaines des cellules hôtes (32, 32A, 32B, 32Z) sont des micro-cellules ou dans lequel au moins certaines des cellules hôtes (32, 32A, 32B, 32Z) sont des femto-cellules.

8. Procédé de fourniture d'une transmission de données sans fil à haut débit de données et bande passante élevée à des véhicules (50, 50A, 50AA, 50B) en mouvement sur une route (52) selon la revendication 1, dans lequel la détermination de la vitesse du véhicule et de la direction de déplacement est accomplie par triangulation de signaux provenant d'un ou plusieurs dispositifs consommateurs de données se déplaçant avec le véhicule (50, 50A, 50AA, 50B).

9. Procédé de fourniture d'une transmission de données sans fil à haut débit de données et bande passante élevée à des véhicules (50, 50A, 50AA, 50B) en mouvement sur une route (52) selon la revendication 1, dans lequel l'étape e) de négociation entre des dispositifs consommateurs de données se déplaçant avec le véhicule (50, 50A, 50AA, 50B) et la plus proche desdites cellules hôtes (32, 32A, 32B, 32Z) à mesure que le véhicule (50, 50A, 50AA, 50B) se déplace sur la route (52) est accomplie de manière répétée à des intervalles de temps fixes.

10. Procédé de fourniture d'une transmission de données sans fil à haut débit de données et bande passante élevée à des véhicules (50, 50A, 50AA, 50B) en mouvement sur une route (52) selon la revendication 1, dans lequel l'étape e) de négociation entre des dispositifs consommateurs de données se déplaçant avec le véhicule (50, 50A, 50AA, 50B) et la plus proche desdites cellules hôtes (32, 32A, 32B, 32Z) à mesure que le véhicule (50, 50A, 50AA, 50B) se déplace sur la route (52) est accomplie de manière répétée après un nombre calculé de poteaux d'éclairage (20, 20A, 20B, 20Z).

11. Procédé de fourniture d'une transmission de données sans fil à haut débit de données et bande passante élevée à des véhicules (50, 50A, 50AA, 50B) en mouvement sur une route (52) selon la revendication 1, dans lequel l'étape e) de négociation entre des dispositifs consommateurs de données se déplaçant avec le véhicule (50, 50A, 50AA, 50B) et la plus proche desdites cellules hôtes (32, 32A, 32B, 32Z) à mesure que le véhicule (50, 50A, 50AA, 50B) se déplace sur la route (52) ainsi que l'étape f) sont en outre implémentées chaque fois qu'il y a un arrêt inattendu du service.

12. Procédé de fourniture d'une transmission de données sans fil à haut débit de données et bande passante élevée à des véhicules (50, 50A, 50AA, 50B) en mouvement sur une route (52) selon la revendication 1, dans lequel un module de DEL (24) et un circuit d'attaque de DEL (26) sont placés au sein de chaque enceinte d'éclairage respective (22, 22A, 22B, 22Z) montée sur les poteaux d'éclairage (20, 20A, 20B, 20Z) situés le long de la route (52), et le module de communications (28) dans l'enceinte d'éclairage respective (22, 22A, 22B, 22Z) est connecté au circuit d'attaque de DEL (26) par l'intermédiaire du bus inter-luminaire à haut débit respectif (34).

13. Procédé de fourniture d'une transmission de données sans fil à haut débit de données et bande passante élevée à des véhicules (50, 50A, 50AA, 50B) en mouvement sur une route (52) selon la revendication 12, dans lequel le module de communications (28) reçoit en outre une alimentation du réseau électrique, ou
dans lequel une alimentation et une connectivité Internet sont fournies à au moins l'un des modules de communications (28) par l'intermédiaire d'un câble d'alimentation électrique par câble ethernet alimenté par un commutateur PoE.

14. Procédé de fourniture d'une transmission de données sans fil à haut débit de données et bande passante élevée à des véhicules (50, 50A, 50AA, 50B) en mouvement sur une route (52) selon la revendication 12, dans lequel un capteur environnemental (30) est placé au sein d'au moins l'une des enceintes d'éclairage (22, 22A, 22B, 22Z) montées sur les poteaux d'éclairage (20, 20A, 20B, 20Z) situés le long de la route (52), et le capteur (30) est connecté au module de communications (28) dans l'enceinte d'éclairage respective (22, 22A, 22B, 22Z) par l'intermédiaire du bus inter-luminaire à haut débit respectif (34).

15. Procédé de fourniture d'une transmission de données sans fil à haut débit de données et bande passante élevée à des véhicules (50, 50A, 50AA, 50B) en mouvement sur une route (52), le procédé comprenant les étapes consistant à :
fournir une pluralité de modules de communications (28), de bus inter-luminaires à haut débit (34) et d'émetteurs-récepteurs hôtes (32, 32A, 32B, 32Z), chaque émetteur-récepteur hôte (32, 32A, 32B, 32Z) étant soit une cellule, soit un dispositif utilisant un protocole de communication RF à haut débit soit un dispositif utilisant un protocole de communication en lumière visible (VLC) à haut débit ;
a) fournir un support de communications câblé à haut débit (36) connecté à Internet (56) à une pluralité d'enceintes d'éclairage (22, 22A, 22B, 22Z) montées sur des poteaux d'éclairage (20, 20A, 20B, 20Z) situés le long de la route (52) ;
b) placer au moins un module de communications (28), un bus inter-luminaire à haut débit (34) et un émetteur-récepteur hôte (32, 32A, 32B, 32Z) au sein d'une enceinte d'éclairage respective (22, 22A, 22B, 22Z) montée sur les poteaux d'éclairage (20, 20A, 20B, 20Z) situés le long de la route (52), dans lequel chaque module de communications (28) est connecté à un support de communications câblé à haut débit (36) et à un bus inter-luminaire à haut débit (34), et l'émetteur-récepteur hôte respectif (32, 32A, 32B, 32Z) est également connecté au bus inter-luminaire à haut débit (34) ; et dans lequel en outre chaque émetteur-récepteur hôte (32, 32A, 32B, 32Z) a une portée couvrant une section de la route (52) près du poteau d'éclairage (20, 20A, 20B, 20Z) sur lequel il est monté, et est capable de transmettre des données sans fil à des dispositifs consommateurs de données se déplaçant avec des véhicules (50, 50A, 50AA, 50B) sur la route (52) au sein de la portée de l'émetteur-récepteur hôte (32, 32A, 32B, 32Z) et de recevoir des données sans fil à partir de dispositifs consommateurs de données se déplaçant avec des véhicules (50, 50A, 50AA, 50B) sur la route (52) au sein de la portée de l'émetteur-récepteur hôte (32, 32A, 32B, 32Z) ;
c) à mesure qu'un véhicule (50, 50A, 50AA, 50B) se déplace sur la route (52), déterminer la vitesse du véhicule, la direction de déplacement et des exigences de flux de données à haut débit pour une quantité sélectionnée de temps pour des dispositifs consommateurs de données se déplaçant avec le véhicule (50, 50A, 50AA, 50B) ;
d) négocier entre des dispositifs consommateurs de données se déplaçant avec le véhicule (50, 50A, 50AA, 50B) et le plus proche dudit émetteur-récepteur hôte (32, 32A, 32B, 32Z) à mesure que le véhicule (50, 50A, 50AA, 50B) se déplace sur la route (52) ;
e) calculer un tampon relais qui doit être mis en file d'attente au niveau d'une série d'émetteurs-récepteurs hôtes (32, 32A, 32B, 32Z) s'étendant dans la direction de déplacement du véhicule (50, 50A, 50AA, 50B) pour un service ininterrompu à des dispositifs consommateurs de données se déplaçant avec le véhicule (50, 50A, 50AA, 50B) ;
f) transmettre une quantité respective de tampons relais calculés à partir des émetteurs-récepteurs hôtes respectifs (32, 32A, 32B, 32Z) pendant des intervalles de temps déterminés sans renégociation entre les dispositifs consommateurs de données et les émetteurs-récepteurs hôtes respectifs (32, 32A, 32B, 32Z) pour fournir un transfert ininterrompu de données vers des dispositifs consommateurs de données se déplaçant avec le véhicule (50, 50A, 50AA, 50B) à mesure que le véhicule (50, 50A, 50AA, 50B) se déplace sur la route (52) ; et
g) répéter les étapes c) à f) à mesure que le véhicule (50, 50A, 50AA, 50B) se déplace davantage le long de la route.
